# FASCICULE DE BREVET EUROPEEN

(11) **EP 4 012 213 B1**
(45) Date de publication et mention de la délivrance du brevet: **12.07.2023**
(21) Numéro de dépôt: 21209219.1
(22) Date de dépôt: 19.11.2021
(51) Int. Cl.: F16D 41/067, F16H 57/04

(54) **ROUE LIBRE MUNIE D'UNE BARRIERE DE LUBRIFICATION A OUVERTURE VARIABLE**
FREILAUF MIT EINER SCHMIERBARRIERE, DIE SICH VARIABEL ÖFFNEN LÄSST
FREE WHEEL PROVIDED WITH A LUBRICATION BARRIER WITH VARIABLE OPENING

(30) Priorité: 10.12.2020 FR 2012952
(43) Date de publication de la demande: 15.06.2022
(73) Titulaire: Airbus Helicopters, 13725 Marignane Cedex (FR)
(72) Inventeur: ROBERT, Sébastien, 13760 SAINT CANNAT (FR); ESCOFFIER, Adrien, 13240 SEPTEMES LES VALLONS (FR)
(74) Mandataire: GPI Brevets

(56) Documents cités:
- JP-A- 2020 051 490
- US-A1- 2013 199 886

## Description

La présente invention concerne une roue libre munie d'une barrière de lubrification à ouverture variable. L'invention se situe ainsi dans le domaine technique de la lubrification d'une roue libre.

Une roue libre est usuellement munie d'une partie menante, d'une partie menée, et d'un système de liaison en rotation pour lier en rotation la partie menante et le partie menée dans des conditions particulières.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas un couple moteur à la partie menée et inversement. La partie menée et la partie menante sont désolidarisées en rotation autour de l'axe de rotation. Dans ce mode fonctionnement désengagé, la partie menée et la partie menante présentent l'une par rapport à l'autre un degré de liberté en rotation autour de l'axe de rotation.

Par contre, dans un mode de fonctionnement dénommé « synchronisé » ou « engagé », la partie menante et la partie menée tournent à la même vitesse et conjointement autour de l'axe de rotation.

Pour passer d'un mode de fonctionnement à un autre, la roue libre est munie d'au moins un organe de liaison interposé entre la partie menante et la partie menée. L'organe de liaison lie en rotation la partie menante et le partie menée dans le mode de fonctionnement engagé. Dans ce mode de fonctionnement engagé, l'organe de liaison permet de supprimer le degré de liberté en rotation précédemment évoqué entre la partie menante et le partie menée.

Selon un exemple, une roue libre comporte un organe de liaison muni d'au moins un cliquet.

Selon un exemple, une roue libre à galets peut comprendre un premier arbre ayant une partie périphérique munie de rampes. A l'inverse, un deuxième arbre comporte une face cylindrique au regard radialement des rampes. Par suite, des organes de liaison de type galets sont portés par une cage et sont disposés dans l'espace séparant radialement les rampes et la face cylindrique. De part et d'autre des galets, la roue libre peut comprendre deux paliers, chaque palier étant interposé radialement entre le premier arbre et le deuxième arbre. Durant le mode de fonctionnement désengagé, les galets sont chacun disposés au pied d'une rampe et ne lient pas en rotation le premier arbre et le deuxième arbre. Lors du passage vers le mode de fonctionnement synchronisé, les galets sont déplacés vers le sommet des rampes et se coincent temporairement entre les rampes et la face cylindrique. Le premier arbre et le deuxième arbre deviennent solidaires en rotation.

Le premier arbre peut représenter la partie menante alors que le deuxième arbre représente la partie menée. L'inverse est aussi possible.

Par ailleurs, le premier arbre peut être un arbre externe qui entoure un arbre interne représenté par le deuxième arbre, ou le deuxième arbre peut être un arbre externe qui entoure un arbre interne représenté par le premier arbre.

Au sein d'une installation motrice d'un giravion, la partie menante d'une roue libre peut être reliée à un moteur alors que la partie menée de la roue libre peut être reliée à un rotor. La roue libre peut être agencée au sein du moteur, ou au sein d'une boîte de transmission de puissance voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre. Chaque roue libre peut désynchroniser un moteur et le rotor par exemple au démarrage ou en cas d'une défaillance du moteur.

Quels que soient son agencement et sa nature, une roue libre peut être lubrifiée pour optimiser sa durée de vie. Durant le mode de fonctionnement engagé, la roue libre peut avoir besoin d'être lubrifiée au niveau des zones de contact. Ces zones de contact peuvent notamment comprendre, sur une roue libre à galets, les galets, les rampes, la face cylindrique et des organes des paliers le cas échéant. Durant le mode de fonctionnement désengagé, la roue libre peut s'échauffer, par exemple suite au mouvement des galets éventuels à haute vitesse. Le système de lubrification vise alors à évacuer des calories pour refroidir la roue libre.

Selon une première réalisation connue, la roue libre est graissée.

Selon une deuxième réalisation, les zones de contact, notamment les galets dans le cadre d'une roue libre à galets, baignent dans un bain d'huile. Noyer les organes de liaison de la roue libre dans de l'huile est efficace pour limiter l'usure de cette roue libre durant le mode de fonctionnement engagé. A contrario, durant le mode de fonctionnement désengagé, l'huile elle-même peut être source d'échauffement par un effet de barbotage.

Une troisième réalisation connue consiste à arroser les zones de contact avec de l'huile. Par exemple, un gicleur achemine de l'huile au sein de l'arbre interne. Cet arbre interne comporte alors au moins un orifice radial pour diriger l'huile entre la partie menante et la partie menée par effet centrifuge, et donc vers les zones de contact de la roue libre. L'huile est ensuite évacuée en dehors de la roue libre par débordement en traversant, par exemple, les deux paliers disposés longitudinalement de part et d'autre des galets.

Cette troisième réalisation permet ainsi de faire circuler une faible quantité de lubrifiant durant le mode de fonctionnement désengagé pour évacuer des calories en dehors de la roue libre. Par contre, la troisième réalisation ne permet de fait pas de noyer les zones de contact durant le mode de fonctionnement engagé.

Pour y remédier, la roue libre peut comprendre au moins un rebord pour délimiter un espace qui forme une « piscine » à lubrifiant contenant les galets. Le rebord n'obture pas totalement un passage en communication fluidique avec l'espace de liaison. Par exemple, un rebord peut être réalisé avec une entretoise épaulée ou avec un déflecteur intégré dans un desdits paliers. Durant le mode de fonctionnement engagé, l'huile s'accumule dans cet espace avant de s'en échapper par débordement au dessus du rebord. Le dimensionnement du rebord est délicat pour permettre de faire suffisamment baigner les zones de contact dans l'huile durant le mode de fonctionnement engagé en évitant à l'inverse un effet de barbotage dans le mode de fonctionnement désengagé.

Le document US 2013/199886 A1 décrit un système muni d'un boîtier. Le boîtier loge deux moyeux et deux ensembles de rouleaux. En outre, le système comporte un mécanisme à friction.

Le document JP 2020 051490 A décrit un système à roue libre muni d'un dispositif de lubrification ayant au moins un joint.

La présente invention a alors pour objet de proposer une roue libre alternative visant à être intéressante aussi bien durant le mode de fonctionnement engagé que durant le mode de fonctionnement désengagé.

L'invention vise ainsi une roue libre comprenant une partie menante et une partie menée qui sont mobiles en rotation autour d'un axe de rotation, ladite roue libre comprenant une cage portant au moins un élément roulant agencé dans un espace de liaison, ledit espace de liaison étant situé radialement par rapport à l'axe de rotation entre un tronçon de liaison menant de la partie menante et un tronçon de liaison mené de la partie menée, ladite roue libre comportant au moins un dispositif de lubrification acheminant un fluide de lubrification dans l'espace de liaison.

La roue libre comprend au moins une barrière à ouverture variable disposée radialement entre la partie menante et la partie menée et longitudinalement contre l'espace de liaison, ladite ouverture étant indexée sur une position relative de ladite cage et de la partie menante.

La partie menante transmet ainsi un couple à la partie menée durant le mode de fonctionnement engagé via le ou les organes de liaison. A l'inverse, la partie menée est mobile en rotation indépendamment de la partie menante dans le mode de fonctionnement désengagé. Le ou les organes de liaison ne lient alors plus en rotation la partie menante et la partie menée. En particulier, dans le mode de fonctionnement désengagé, la partie menante peut être immobile au regard de l'axe de rotation alors que la partie menée est au contraire mobile en rotation autour de l'axe de rotation. Durant le mode de fonctionnement engagé, la partie menée et la partie menante peuvent être conjointement mobiles en rotation autour de l'axe de rotation.

Le dispositif de lubrification peut acheminer le fluide de lubrification dans l'espace de liaison aussi bien durant le mode de fonctionnement engagé que durant le mode de fonctionnement désengagé.

Par suite, l'invention propose une barrière à ouverture variable.

Le terme « ouverture » désigne un unique canal permettant de traverser la barrière ou plusieurs canaux permettant de traverser cette barrière. Autrement dit, l'ouverture comporte un ou plusieurs canaux au moins partiellement obturables.

L'expression « ladite ouverture étant indexée sur une position relative de ladite cage et de la partie menante » signifie qu'une surface de passage offerte au fluide de lubrification présent dans l'espace de liaison est définie par l'ouverture et varie en fonction d'une position relative de la cage par rapport à la partie menante. En présence de plusieurs canaux, l'aire de la surface de passage de l'ouverture correspond à la somme des aires des surfaces de passage des canaux.

Durant le mode de fonctionnement engagé, le ou les éléments roulants sont disposés sur une ou des rampes respectives de la partie menante. La cage atteint de fait une première position par rapport à la partie menante. Dans cette première position de la cage par rapport à la partie menante, l'aire totale de l'ouverture est minimisée, voire est quasiment nulle. La barrière représente une barrière de grandes dimensions tendant à maintenir le fluide de lubrification dans l'espace de liaison. Le fluide de lubrification ne peut pas traverser la barrière pour s'échapper de l'espace de liaison, à l'exception d'un flux de fuite éventuel ayant un débit qui est inférieur au débit entrant dans l'espace de liaison, permettant ainsi de noyer totalement cette dernière.

A l'inverse, durant le mode fonctionnement désengagé, le ou les éléments roulants se trouvent au pied d'une ou de rampes respectives. La cage atteint de fait une deuxième position par rapport à la partie menante. Dans cette deuxième position de la cage par rapport à la partie menante, l'aire totale de l'ouverture est maximale pour favoriser l'évacuation du fluide de lubrification en dehors de l'espace de liaison. Le fluide de lubrification peut s'échapper de l'espace de liaison au travers de l'ouverture de la barrière.

La barrière représente donc une barrière de lubrification, à surface de passage variable, coopérant avec la partie menante de la roue libre et la cage.

La barrière permet ainsi d'assurer la lubrification sensiblement en noyant tous les éléments de la roue libre présents dans l'espace de liaison dans le mode de fonctionnement engagé, et en limitant l'échauffement par abaissement du niveau de fluide de lubrification dans l'espace de liaison durant le mode de fonctionnement désengagé.

La roue libre peut comprendre une ou plusieurs des caractéristiques additionnelles qui suivent, prises seules ou en combinaison.

Selon une possibilité, ladite barrière peut comporter une première partie fixe par rapport à la partie menante, ladite barrière comportant une deuxième partie solidaire de ladite cage, la première partie comprenant au moins un premier passage, la deuxième partie comprenant au moins un deuxième passage en regard longitudinalement du premier passage dans un mode de fonctionnement désengagé de la roue libre.

La barrière comporte ainsi une première partie et une deuxième partie mobiles en rotation, autour de l'axe de rotation de la roue libre, pour mettre soit en vis à vis soit en quinconce leurs passages respectifs.

Le ou les deuxièmes passages sont ainsi disposés dans le prolongement d'un ou de premiers passages respectifs durant le mode de fonctionnement désengagé ce qui permet de définir une ouverture mettant en communication fluidique l'espace de liaison avec un autre milieu via ces passages.

A l'inverse, durant le mode de fonctionnement engagé, le ou les deuxièmes passages sont disposés en quinconce par rapport au ou aux premiers passages respectifs.

Selon une possibilité, la première partie peut comporter un premier anneau muni dudit au moins un premier passage, et le cas échéant de chaque premier passage, ladite deuxième partie comprenant un deuxième anneau muni dudit au moins un deuxième passage, et le cas échéant de chaque deuxième passage.

Cette architecture permet d'obtenir relativement facilement le fonctionnement décrit précédemment.

Selon une possibilité, le premier anneau peut être parallèle au deuxième anneau pour faciliter ce fonctionnement et l'agencement du système.

Selon une possibilité compatible avec la précédente, le premier anneau et ledit deuxième anneau peuvent être crénelés, ledit au moins un premier passage étant disposé circonférentiellement entre deux premiers créneaux du premier anneau, ledit au moins un deuxième passage étant disposé circonférentiellement entre deux deuxièmes créneaux du deuxième anneau.

En présence de plusieurs premiers passages, chaque premier passage est circonférentiellement, à savoir en azimut au regard de l'axe de rotation de la roue libre, entre deux premiers créneaux distincts. Chaque premier créneau est donc disposé circonférentiellement entre deux premiers passages. De même, en présence de plusieurs deuxièmes passages, chaque deuxième passage est circonférentiellement, à savoir en azimut au regard de l'axe de rotation de la roue libre, entre deux deuxièmes créneaux distincts. Chaque deuxième créneau est donc disposé circonférentiellement entre deux deuxièmes passages.

Agencer circonférentiellement plusieurs premiers passages et de fait plusieurs deuxièmes passages présente l'avantage d'évacuer le fluide de lubrification tout autour de l'axe de rotation. Un palier présent par exemple derrière la barrière selon un sens d'évacuation du fluide de lubrification est alors bien lubrifié.

Selon une possibilité compatible avec les précédentes, au moins un premier créneau peut comporter une butée mobile en rotation dans un deuxième passage dudit au moins un deuxième passage.

La butée peut permettre de positionner de manière optimisée la cage par rapport à la partie menante.

Selon une possibilité compatible avec les précédentes, au moins un deuxième créneau peut comporter une excroissance mobile en rotation dans un premier passage dudit au moins un premier passage.

L'excroissance peut permettre de positionner de manière optimisée la cage par rapport à la partie menante.

Selon une possibilité compatible avec les précédentes, la première partie peut être coincée longitudinalement entre un épaulement de la partie menante et une bague interne d'un palier à roulement.

La première partie est ainsi rendue aisément solidaire en rotation de la partie menante.

Selon une possibilité compatible avec les précédentes, ledit élément roulant peut coopérer avec une rampe de la partie menante et une face cylindrique de la partie menée.

La roue libre est alors par exemple une roue libre à galets comprenant plusieurs galets portés par la cage.

Selon une possibilité compatible avec les précédentes, ladite roue libre peut comporter au moins un palier interne interposé dans l'espace de liaison entre la partie menante et la partie menée.

Ainsi, un palier interne, par exemple de type roulement à billes, peut aussi être lubrifié.

Selon une possibilité compatible avec les précédentes, l'espace de liaison peut s'étendre longitudinalement le long de l'axe de rotation d'un premier côté jusqu'à un second côté, ladite roue libre comprenant une unique dite barrière disposée longitudinalement contre le premier côté de l'espace de liaison, ladite roue libre comprenant un accès mettant en communication fluidique ledit second côté et un milieu extérieur.

Ainsi, l'espace de liaison n'est pas totalement fermé ce qui permet de pouvoir renouveler le fluide de lubrification dans l'espace de liaison.

L'accès et le dispositif de lubrification peuvent être dimensionnés pour maintenir un niveau de fluide de lubrification souhaité dans l'espace de liaison durant le mode de fonctionnement engagé.

Alternativement, il est possible d'avoir deux barrières agencées longitudinalement de part et d'autre de l'espace de liaison.

Selon une possibilité compatible avec les précédentes, une partie entourée de la partie menée est entourée au moins partiellement par une partie non entourée de la partie menante ou une partie entourée de la partie menante est entourée au moins partiellement par une partie non entourée de la partie menée.

Selon une possibilité, la partie non entourée peut comporter une protubérance annulaire agencée en regard du second côté et d'une extrémité obturée de la partie entourée, ledit accès étant disposé entre ladite protubérance et ladite extrémité obturée.

Cette caractéristique tend à optimiser l'accès.

Selon une possibilité compatible avec les précédentes, la partie entourée peut être creuse, ledit tronçon de liaison menant comportant au moins un canal mettant en communication fluidique l'espace de liaison et un milieu interne disposé dans cette partie entourée, ledit dispositif de lubrification comprenant un injecteur injectant ledit fluide de lubrification dans ledit milieu interne.

Le terme « injecteur » est à interpréter au sens large en désignant un organe permettant d'introduire le fluide de lubrification dans le milieu interne. Par exemple, l'injecteur peut comprendre un gicleur, un simple tuyau...

Selon une possibilité compatible avec les précédentes, ladite partie entourée peut comporter un rebord qui s'étend radialement dans le milieu interne d'une paroi de ce tronçon de liaison menant vers l'axe de rotation sans atteindre cet axe de rotation, ledit milieu interne s'étendant longitudinalement selon l'axe de rotation dudit rebord à une extrémité obturée de la partie entourée.

Le rebord vise à favoriser l'alimentation en fluide de lubrification de l'espace de liaison via le ou les passages.

Outre une roue libre, l'invention vise aussi un véhicule comprenant cette roue libre.

Par exemple, le véhicule peut comporter un moteur et un rotor participant au déplacement du véhicule, la partie menante de la roue libre étant fonctionnellement reliée à un arbre du moteur et ladite partie menée de la roue libre étant reliée au rotor.

L'invention et ses avantages apparaîtront avec plus de détails dans le cadre de la description qui suit avec des exemples donnés à titre illustratif en référence aux figures annexées qui représentent :
la figure 1, une vue montrant une roue libre selon l'invention dans le mode de fonctionnement engagé,
la figure 2, une vue montrant un exemple de barrière munie d'une butée,
la figure 3, une vue montrant un exemple de barrière munie d'une excroissance,
la figure 4, une vue partielle de la roue libre de la figure 1 en trois dimensions,
la figure 5, une vue montrant une roue libre selon l'invention dans le mode de fonctionnement désengagé, et
la figure 6, une vue partielle de la roue libre de la figure 5 en trois dimensions.

Les éléments présents dans plusieurs figures distinctes sont affectés d'une seule et même référence.

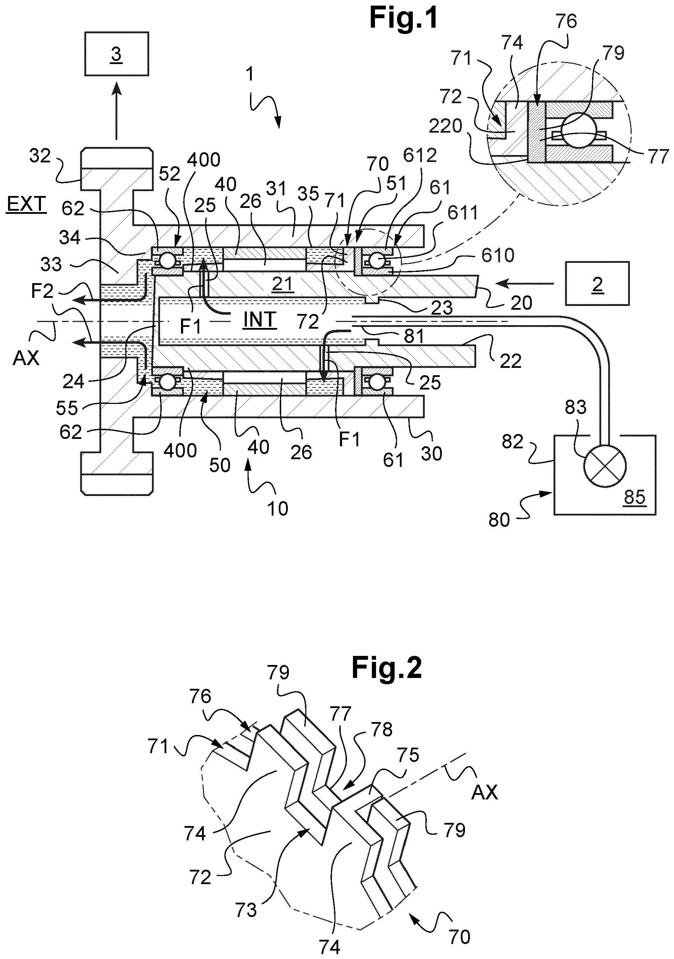

La figure 1 présente une roue libre 10 selon l'invention.

La roue libre 10 est pourvue d'une partie menante 20 et d'une partie menée 30 qui sont chacune mobiles en rotation autour d'un même axe de rotation AX. La partie menante 20 peut être une pièce monolithique ou peut comprendre plusieurs pièces fixées les unes ou autres. La partie menée 30 peut être une pièce monolithique ou peut comprendre plusieurs pièces fixées les unes ou autres. Au moins un tronçon de la partie menante 20 ou de la partie menée 30 peut présenter une symétrie par rapport à l'axe de rotation AX.

La partie menante 20 peut se trouver radialement au moins partiellement entre l'axe de rotation AX et la partie menée 30. Dès lors, la partie menante 20 peut être entourée par la partie menée 30. En particulier, un tronçon de liaison mené 31 de la partie menée 30 entoure au moins partiellement un tronçon de liaison menant 21 de la partie menante 20.

Par exemple, le tronçon de la liaison menant 21 peut être creux. Eventuellement, le tronçon de la liaison menant 21 peut s'étendre jusqu'à une extrémité 24 obturée par un fond, cette extrémité 24 étant localisée dans la partie menée 30.

Selon une autre variante compatible avec l'invention, le tronçon de liaison mené 31 de la partie menée 30 peut être entouré au moins partiellement par le tronçon de liaison menant 21 de la partie menante 20.

Quelle que soit la variante, une des parties menante 20 et menée 30 est dite « partie entourée » par commodité et est entourée localement par l'autre partie dite « partie non entourée ». Selon les figures, la partie menante 20 est la partie entourée, la partie menée 30 étant la partie non entourée. L'inverse est possible, la partie menante 20 étant alors la partie non entourée et la partie menée 30 étant la partie entourée.

Indépendamment de la position relative de la partie menante 20 vis-à-vis de la partie menée 30, la roue libre 10 peut être agencée au sein de tout type d'architectures.

Par exemple, la roue libre 10 peut être agencée au sein d'un véhicule 1. En particulier, la roue libre 10 peut être disposée au sein d'un giravion. Selon un exemple, la partie menante 20 peut être reliée par une chaîne cinématique à un moteur 2 alors que la partie menée 30 peut être reliée par une autre chaîne cinématique à un rotor 3.

Quel que soit son agencement, la roue libre 10 comprend au moins un organe de liaison en rotation 40 pour d'une part lier en rotation, autour de l'axe de rotation AX, la partie menante 20 et la partie menée 30 durant un mode de fonctionnement engagé et, d'autre part, pour désolidariser en rotation, autour de l'axe de rotation AX, la partie menante 20 et la partie menée 30 durant un mode de fonctionnement désengagé.

Indépendamment du nombre d'organes de liaison en rotation 40, chaque organe de liaison en rotation 40 est agencé dans un espace qui est dénommé « espace de liaison 50 » par commodité et en raison du rôle tenu par chaque organe de liaison en rotation 40. Cet espace de liaison 50 s'étend radialement, à savoir par rapport à l'axe de rotation AX et donc perpendiculairement à cet axe de rotation AX, entre la partie menante 20 et la partie menée 30. En particulier, l'espace de liaison 50 est disposé entre le tronçon de liaison menant 21 et le tronçon de liaison mené 31.

Par exemple, au moins un voire le cas échéant chaque organe de liaison en rotation peut prendre la forme d'un élément roulant 40 disposé dans une cage 400. Un tel élément roulant 40 peut être du type d'un galet cylindrique par exemple.

Dès lors, la partie menante 20 peut comprendre une rampe 26 par élément roulant 40. Chaque rampe 26 peut présenter une face inclinée ou courbe, qui n'est par exemple pas tangente à un cercle centré sur l'axe de rotation. A l'inverse, la partie menée 30 peut comprendre une face cylindrique 35 agencée en regard des rampes 26. Chaque élément roulant 40 peut alors être libre de se déplacer entre une rampe 26 et la face cylindrique 35 durant le mode de fonctionnement désengagé et peut être coincé entre une rampe 26 et la face cylindrique 35 durant le mode de fonctionnement engagé.

Indépendamment des caractéristiques précédentes, la roue libre 10 peut comporter au moins un palier 61,62 de guidage en rotation, par exemple entre la partie menante 20 et la partie menée 30. Par exemple, un palier 61,62 de guidage en rotation peut prendre la forme d'un roulement à billes.

Au moins un palier dénommé « palier interne 62 » par commodité peut être positionné dans l'espace de liaison 50 et peut s'étendre radialement de la partie menante 20 jusqu'à la partie menée 30.

Par exemple, le palier interne peut comporter deux roulements en O disposés côte à côte.

Un palier dénommé « palier de roulement 61 » par commodité peut être positionné en dehors de l'espace de liaison 50. Par exemple, le palier de roulement 61 comporte une bague interne 610 emmanchée sur la partie entourée, la partie menante 20 selon l'exemple. La bague interne 610 est entourée par une bague externe 612. Dès lors, plusieurs organes roulants 611 sont disposés chacun entre la bague interne 610 et la bague externe 612. De tels organes roulants peuvent être des billes, des rouleaux...

Le palier interne 62 peut aussi être un palier de ce type.

Selon l'exemple illustré, un palier de roulement 61 est positionné longitudinalement, à savoir selon l'axe de rotation AX, en dehors de l'espace de liaison 50.

Un palier interne 62 de guidage est disposé dans l'espace de liaison au niveau d'un second côté 52 de l'espace de liaison 50.

Ainsi, chaque organe de liaison en rotation 40 est agencé longitudinalement entre le palier de roulement 61 et le palier interne 62.

Indépendamment des caractéristiques précédentes, la roue libre 10 est munie d'un dispositif de lubrification 80. Ce dispositif de lubrification 80 comprend un fluide de lubrification 85. Par exemple, ce fluide de lubrification 85 comporte de l'huile.

Par exemple, ce fluide de lubrification 85 peut être acheminé par un injecteur 81 dans un milieu interne INT délimité par la partie entourée, à savoir la partie menante 20 sur la figure 1. Selon l'exemple illustré, le dispositif de lubrification 80 peut comprendre une pompe 83 disposée dans un réservoir 82 contenant le fluide de lubrification 85. La pompe 83 dirige, via une liaison fluidique, le fluide de lubrification 85 vers l'injecteur 81.

Indépendamment de cet aspect, l'injecteur 81 injecte le fluide de lubrification dans le milieu interne INT. Par exemple, le milieu interne INT est délimité par le tronçon de liaison menant 21. Par exemple, le milieu interne INT est fermé longitudinalement selon un sens par l'extrémité 24.

Eventuellement, la partie entourée, et le cas échéant le tronçon de liaison menant 21 selon l'illustration des figures, comporte un rebord 23 délimitant partiellement le milieu interne INT. Par exemple, ce rebord 23 prend la forme d'une excroissance annulaire interne qui s'étend radialement dans le milieu interne INT, à partir d'une paroi 22 cylindrique de la partie entourée et vers l'axe de rotation AX. En raison de la force centrifuge exercée en utilisation, un tel rebord 23 peut contenir le fluide de lubrification 85 dans le milieu interne INT, conjointement avec l'extrémité 24.

Pour transférer le fluide de lubrification 85 dans l'espace de liaison 50, la partie entourée peut comporter au moins un canal 25 mettant en communication fluidique le milieu interne INT et l'espace de liaison 50. Chaque canal 25 peut traverser la paroi 22 de part en part voire radialement. Eventuellement, deux canaux 25 débouchent longitudinalement de part et d'autre des organes de liaison en rotation 40, par exemple vers la cage 400. Le cas échéant, la cage 400 peut comporter des perçages susceptibles d'être en communication fluidique avec les canaux et l'espace de liaison.

Selon une possibilité, au moins un canal 25 peut traverser une rampe 26 pour déboucher sur un organe de liaison en rotation 40.

Par ailleurs, la roue libre 10 comprend au moins une barrière 70 disposée radialement, au regard de l'axe de rotation AX, entre la partie menante 20 et la partie menée 30. La barrière 70 est disposée, longitudinalement, au niveau d'un côté de l'espace de liaison 50.

Cette barrière 70 présente une ouverture variable en fonction de la position de la cage 400 par rapport à la partie menante 20, pour obturer une liaison fluidique 53 présente entre la partie menante 20 et la partie menée 30 durant le mode de fonctionnement engagé.

La barrière 70 peut comporter une première partie 71 fixe par rapport à la partie menante 20. Par exemple, la première partie 71 comporte un pied qui est coincé longitudinalement entre un épaulement 220 de la partie menante 20 et la bague interne 610 du palier à roulement 61. Eventuellement, le pied peut comprendre des cannelures coopérant avec des cannelures de la partie menante 20.

En outre, la barrière 70 peut comporter une deuxième partie 76 solidaire de la cage 400.

Par exemple, la cage 400 et la deuxième partie 76 sont fixées l'une à l'autre ou forment une pièce monolithique.

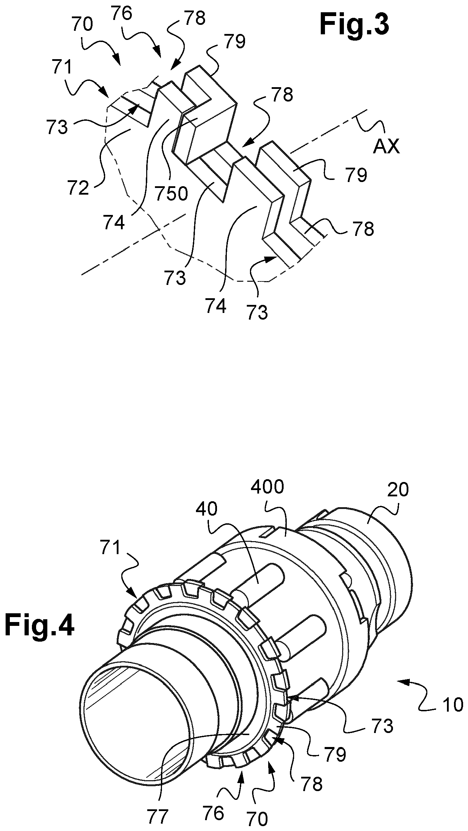

Les figures 2 et 3 présentent deux vues partielles de deux barrières différentes selon l'invention.

En référence à la figure 2 et quelle que soit la réalisation, la première partie 71 comprend au moins un premier passage 73, et plusieurs premiers passages 73 selon les exemples illustrés. De même, la deuxième partie 76 comprend au moins un deuxième passage 78, et plusieurs deuxièmes passages 78 selon les exemples illustrés.

Par exemple, la première partie 71 comporte un premier anneau 72 muni de chaque premier passage 73, chaque premier passage prenant par exemple la forme d'une découpe ou d'une encoche. De même, la deuxième partie 76 comprend un deuxième anneau 77 muni de chaque deuxième passage 78, chaque deuxième passage 78 prenant par exemple la forme d'une découpe.

Par exemple, le premier anneau 72 et le deuxième anneau 77 sont crénelés. Ainsi, le premier anneau 72 comporte à sa périphérie une pluralité de premiers passages 73 disposés chacun circonférentiellement entre deux premiers créneaux 74. De même, le deuxième anneau 77 comporte à sa périphérie une pluralité de deuxièmes passages 78 disposés chacun circonférentiellement entre deux deuxièmes créneaux 79 du deuxième anneau 77.

De manière complémentaire ou alternative, le premier anneau 72 et le deuxième anneau 77 peuvent comporter respectivement des premiers passages 73 et des deuxièmes passages 78 entre leurs centres et leurs périphéries.

Selon un autre aspect, le premier anneau 72 peut être parallèle au deuxième anneau 77.

Indépendamment de la manière de réaliser les divers passages 73, 78, chaque premier passage 73 peut être dans l'alignement d'un deuxième passage 78, suivant un axe parallèle à l'axe de rotation AX, uniquement durant le mode de fonctionnement désengagé. Durant le mode de fonctionnement engagé, chaque premier passage 73 est en regard au moins partiellement d'une surface pleine de la deuxième partie 76 et chaque deuxième passage 78 est en regard au moins partiellement d'une surface pleine de la première partie 71.

Selon un autre aspect, un premier créneau 74 peut comporter une butée 75 mobile en rotation au sein d'un deuxième passage 78, et donc par rapport à ce deuxième passage.

De manière alternative ou complémentaire et selon l'exemple illustré sur la figure 3, un deuxième créneau 79 peut comporter une excroissance 750 mobile en rotation dans un premier passage 73, et donc mobile par rapport à ce premier passage.

Selon un autre aspect et en référence à la figure 1, la roue libre 10 peut, selon l'exemple illustré, comporter seulement une barrière 70. Par exemple, cette unique barrière 70 est disposée au niveau du premier côté 51 de l'espace de liaison 50. Dès lors, la roue libre 10 comprend un accès 55 mettant en communication fluidique le second côté 52 et un milieu extérieur EXT situé à l'extérieur de la roue libre 10.

Par exemple, la partie non entourée, à savoir la partie menée 30 selon la figure 1, comporte une protubérance 33 annulaire au regard du second côté 52. Selon l'exemple illustré, la protubérance 33 est accolée à un épaulement interne 34. Cet épaulement interne 34 peut bloquer le deuxième palier 62 longitudinalement en synergie avec la cage 400.

L'accès 55 peut alors prendre la forme d'une gorge annulaire disposée longitudinalement entre la protubérance 33 et l'extrémité 24 obturée de la partie entourée, à savoir la partie menante 20 selon la figure 1, voire radialement au regard de l'épaulement interne 34.

L'accès 55 peut être positionné de manière à favoriser l'évacuation du fluide de lubrification par les passages 73, 78 durant le mode fonctionnement désengagé.

Selon une variante non illustrée, il est envisageable d'avoir par exemple deux barrières 70.

Les figures 1 et 4 à 6 illustrent le fonctionnement de la roue libre 10.

Selon la figure 1, la roue libre 10 est dans le mode de fonctionnement engagé.

L'injecteur 81 achemine le fluide de lubrification 85 dans le milieu interne INT. Le fluide de lubrification 85 traverse les canaux 25 et pénètre dans l'espace de liaison 50 selon la flèche F1.

Les éléments roulant 40 sont en haut des rampes 26 et lient en rotation la partie menante 20 et la partie menée 30.

Dès lors, et en référence à la figure 4, les premiers passages 73 ne sont pas en vis-à-vis des deuxièmes passages 78. La barrière 70 tend alors à rendre étanche l'espace de liaison 50 au niveau du second côté 52.

En référence à la figure 1, la barrière 70 obturant la liaison fluidique 53 au niveau du second côté 52 de l'espace de liaison 50, le fluide de lubrification 85 tend à s'accumuler dans l'espace de liaison 50 et à noyer non seulement le ou les organes de liaison en rotation 40 mais aussi le ou les paliers internes 62 éventuels. Le fluide de lubrification 85 s'échappe doucement de l'espace de liaison 50 par débordement, selon les flèches F2, via l'accès 55 pour rejoindre par exemple le réservoir 82. Pour favoriser l'effet piscine, la protubérance 33 de la partie menée 30 peut s'étendre longitudinalement au regard de l'espace de liaison 50. Cette ouverture 55 peut être dimensionnée et positionnée afin de pouvoir noyer de manière adéquate l'espace de liaison 50

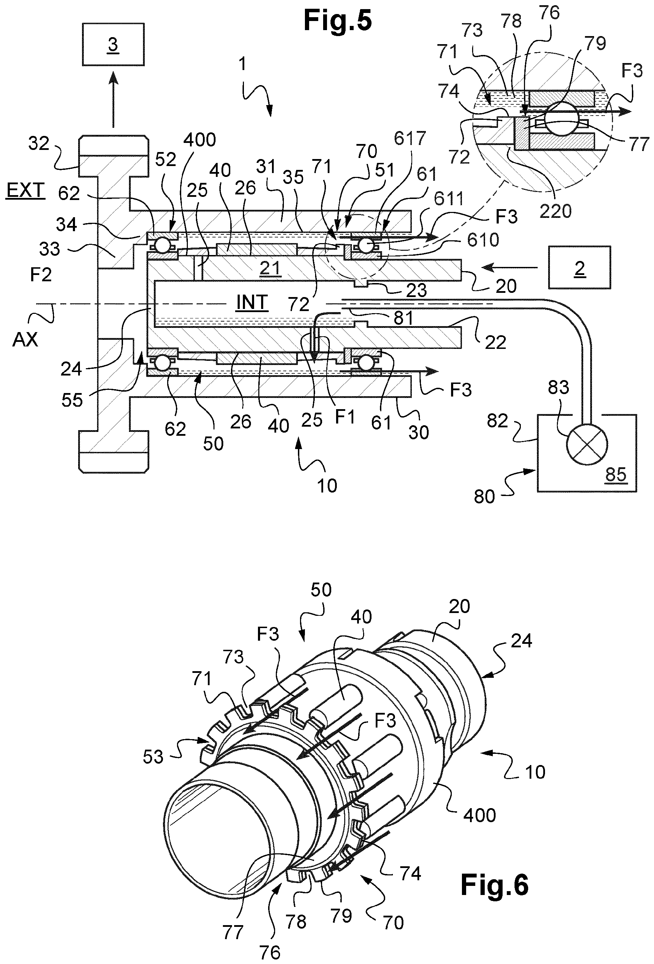

Durant le mode de fonctionnement désengagé illustré sur la figure 5, la partie menante 20 peut être à l'arrêt.

Les éléments roulant 40 sont en bas des rampes 26 et ne lient plus en rotation la partie menante 20 et la partie menée 30.

Dès lors, et en référence à la figure 6, les premiers passages 73 sont désormais en vis-à-vis des deuxièmes passages 78. La barrière 70 met alors en communication fluidique l'espace de liaison 50 avec le milieu extérieur.

Dès lors, l'espace de liaison 50 peut être vidé partiellement par l'ouverture de la barrière 70 ainsi créée selon les flèches F3. Le ou les organes de liaison en rotation 40 mais aussi le ou les paliers internes 62 éventuels ne sont plus noyés dans le fluide de lubrification 85. Par contre, le palier de roulement 61 est lubrifié.

En particulier, le fluide de lubrification 85 peut tendre à s'accumuler contre la face cylindrique 35, le cas échéant entre les paliers 61, 62, sous l'effet de la force centrifuge. Selon l'exemple illustré, le fluide de lubrification peut s'étendre entre les bagues externes des paliers 61, 62. En présence d'un accès 55, cet accès 55 peut être positionné de manière à être radialement plus loin de la face cylindrique 35 que les passages 73, 78 afin que le fluide de lubrification soit évacué par ces passages 73, 78. Comme illustré sur la figure 5, les organes de liaison en rotation 40 mais aussi les paliers 61, 62 ne baignent alors pas dans le fluide de lubrification. Naturellement, la présente invention est sujette à de nombreuses variations tant qu'elles restent dans l'esprit comme défini par les revendications ajoutées.

## Revendications

1. Roue libre (10) comprenant une partie menante (20) et une partie menée (30) qui sont mobiles en rotation autour d'un axe de rotation (AX), ladite roue libre (10) comprenant une cage (400) portant au moins un élément roulant (40) agencé dans un espace de liaison (50), ledit espace de liaison (50) étant situé radialement par rapport à l'axe de rotation (AX) entre un tronçon de liaison menant (21) de la partie menante (20) et un tronçon de liaison mené (31) de la partie menée (30), ladite roue libre (10) ayant au moins un dispositif de lubrification (80) acheminant un fluide de lubrification (85) dans l'espace de liaison (50),
**caractérisée en ce que** ladite roue libre (10) comprend au moins une barrière (70) à ouverture variable disposée radialement entre la partie menante (20) et la partie menée (30) et longitudinalement contre l'espace de liaison (50), ladite ouverture étant indexée sur une position relative de ladite cage (400) et de la partie menante (20).

2. Roue libre selon la revendication 1,
**caractérisée en ce que** ladite barrière (70) comporte une première partie (71) fixe par rapport à la partie menante (20), ladite barrière comportant une deuxième partie (76) solidaire de ladite cage (400), la première partie (71) comprenant au moins un premier passage (73), la deuxième partie (76) comprenant au moins un deuxième passage (78) en regard longitudinalement du premier passage (73) dans un mode de fonctionnement désengagé de la roue libre (10).

3. Roue libre selon la revendication 2,
**caractérisée en ce que** ladite première partie comporte un premier anneau (72) muni dudit au moins un premier passage (73), ladite deuxième partie (76) comprenant un deuxième anneau (77) muni dudit au moins un deuxième passage (78).

4. Roue libre selon la revendication 3,
**caractérisée en ce que** ledit premier anneau (72) est parallèle au deuxième anneau (77).

5. Roue libre selon l'une quelconque des revendications 3 à 4, **caractérisée en ce que** ledit premier anneau (72) et ledit deuxième anneau (77) sont crénelés, ledit au moins un premier passage (73) étant disposé circonférentiellement entre deux premiers créneaux (74) du premier anneau (72), ledit au moins un deuxième passage (78) étant disposé circonférentiellement entre deux deuxièmes créneaux (79) du deuxième anneau (77).

6. Roue libre selon la revendication 5,
**caractérisée en ce qu'**au moins un premier créneau (74) comporte une butée (75) mobile en rotation dans un deuxième passage (78) dudit au moins un deuxième passage (78).

7. Roue libre selon l'une quelconque des revendications 5 à 6, **caractérisée en ce qu'**au moins un deuxième créneau (79) comporte une excroissance (750) mobile en rotation dans un premier passage (73) dudit au moins un premier passage (73).

8. Roue libre selon l'une quelconque des revendications 2 à 7, **caractérisée en ce que** ladite première partie (71) est coincée longitudinalement entre un épaulement (20) de la partie menante (20) et une bague interne (610) d'un palier à roulement (61).

9. Roue libre selon l'une quelconque des revendications 1 à 8, **caractérisée en ce que** ledit élément roulant (40) coopère avec une rampe (26) de la partie menante (20) et une face cylindrique (35) de la partie menée (30).

10. Roue libre selon l'une quelconque des revendications 1 à 9, **caractérisée en ce que** l'espace de liaison (50) s'étend longitudinalement le long de l'axe de rotation (AX) d'un premier côté (51) jusqu'à un second côté (52), ladite roue libre (10) comprenant une unique dite barrière (70) disposée longitudinalement contre le premier côté (51) de l'espace de liaison (50), ladite roue libre (10) comprenant un accès (55) mettant en communication fluidique ledit second côté (52) et un milieu extérieur (EXT).

11. Roue libre selon la revendication 10,
**caractérisée en ce qu'**une partie entourée de la partie menée (30) est entourée au moins partiellement par une partie non entourée de la partie menante (20) ou une partie entourée de la partie menante (20) est entourée au moins partiellement par une partie non entourée de la partie menée (30), ladite partie non entourée comporte une protubérance (33) annulaire agencée en regard du second côté (52) et d'une extrémité (24) obturée de la partie entourée, ledit accès (55) étant disposé entre ladite protubérance (33) et ladite extrémité (24) obturée.

12. Roue libre selon l'une quelconque des revendications 1 à 11, **caractérisée en ce que** ladite roue libre (10) comporte au moins un palier interne (62) interposé dans l'espace de liaison (50) entre la partie menante (20) et la partie menée (30).

13. Roue libre selon l'une quelconque des revendications 1 à 12, **caractérisée en ce qu'**une partie entourée de la partie menée (30) est entourée au moins partiellement une partie non entourée de la partie menante (20) ou une partie entourée de la partie menante (20) est entourée au moins partiellement par une partie non entourée de la partie menée (30), ladite partie entourée est creuse, et comportant au moins un canal (25) mettant en communication fluidique l'espace de liaison (50) et un milieu interne (INT) disposé dans cette partie entourée, ledit dispositif de lubrification (80) comprenant un injecteur (81) injectant ledit fluide de lubrification (85) dans ledit milieu interne (INT).

14. Roue libre selon la revendication 13,
**caractérisée en ce que** ladite partie entourée comporte un rebord (23) qui s'étend radialement dans le milieu interne (INT) vers l'axe de rotation (AX) sans atteindre cet axe de rotation, ledit milieu interne (INT) s'étendant longitudinalement selon l'axe de rotation (AX) dudit rebord (23) à une extrémité (24) obturée de la partie entourée.

15. Véhicule (1),
**caractérisé en ce que** ledit véhicule (1) comporte une roue libre (10) selon l'une quelconque des revendications 1 à 14.

16. Véhicule selon la revendication 15,
**caractérisé en ce que** ledit véhicule (1) comporte un moteur (2) et un rotor (3) participant au déplacement du véhicule (1), la partie menante (20) est fonctionnellement reliée à un arbre du moteur (2) et ladite partie menée (30) étant reliée au rotor (3).

## Patentansprüche

1. Freilauf (10) mit einem antreibenden Teil (20) und einem angetriebenen Teil (30), die um eine Drehachse (AX) drehbar sind, wobei der Freilauf (10) einen Käfig (400) umfasst, der mindestens einen in einem Verbindungsraum (50) angeordneten Wälzkörper (40) trägt, wobei der Verbindungsraum (50) radial in Bezug auf die Drehachse (AX) zwischen einem antreibenden Verbindungsabschnitt (21) des antreibenden Teils (20) und einem angetriebenen Verbindungsabschnitt (31) des angetriebenen Teils (30) angeordnet ist, wobei der Freilauf (10) mindestens eine Schmiervorrichtung (80) aufweist, die ein Schmierfluid (85) in den Verbindungsraum (50) leitet,
**dadurch gekennzeichnet, dass** der Freilauf (10) mindestens eine Barriere (70) mit variabler Öffnung umfasst, die radial zwischen dem antreibenden Teil (20) und dem angetriebenen Teil (30) und in Längsrichtung gegen den Verbindungsraum (50) angeordnet ist, wobei die Öffnung auf eine relative Position des Käfigs (400) und des antreibenden Teils (20) indexiert ist.

2. Freilauf nach Anspruch 1,
**dadurch gekennzeichnet, dass** die Barriere (70) einen ersten Teil (71) umfasst, der in Bezug auf den antreibenden Teil (20) fest ist, dass die Barriere einen zweiten Teil (76) umfasst, der mit dem Käfig (400) fest verbunden ist, dass der erste Teil (71) mindestens einen ersten Durchgang (73) umfasst, und dass der zweite Teil (76) mindestens einen zweiten Durchgang (78) umfasst, der in einem ausgekuppelten Betriebsmodus des Freilaufs (10) dem ersten Durchgang (73) in Längsrichtung gegenüberliegt.

3. Freilauf nach Anspruch 2,
**dadurch gekennzeichnet, dass** der erste Teil einen ersten Ring (72) umfasst, der mit dem mindestens einen ersten Durchgang (73) versehen ist, und der zweite Teil (76) einen zweiten Ring (77) umfasst, der mit dem mindestens einen zweiten Durchgang (78) versehen ist.

4. Freilauf nach Anspruch 3,
**dadurch gekennzeichnet, dass** der erste Ring (72) parallel zum zweiten Ring (77) ist.

5. Freilauf nach einem der Ansprüche 3 bis 4,
**dadurch gekennzeichnet, dass** der erste Ring (72) und der zweite Ring (77) gezackt sind, wobei der mindestens eine erste Durchgang (73) umfangsmäßig zwischen zwei ersten Zacken (74) des ersten Rings (72) angeordnet ist, und der mindestens eine zweite Durchgang (78) umfangsmäßig zwischen zwei zweiten Zacken (79) des zweiten Rings (77) angeordnet ist.

6. Freilauf nach Anspruch 5,
**dadurch gekennzeichnet, dass** mindestens eine erste Zacke (74) einen Anschlag (75) aufweist, der in einem zweiten Durchgang (78) des mindestens einen zweiten Durchgangs (78) drehbar ist.

7. Freilauf nach einem der Ansprüche 5 bis 6,
**dadurch gekennzeichnet, dass** mindestens ein zweiter Zacken (79) eine Ausstülpung (750) aufweist, die in einem ersten Durchgang (73) des mindestens einen ersten Durchgangs (73) drehbar ist.

8. Freilauf nach einem der Ansprüche 2 bis 7,
**dadurch gekennzeichnet, dass** der erste Teil (71) in Längsrichtung zwischen einer Schulter (20) des antreibenden Teils (20) und einem inneren Ring (610) eines Wälzlagers (61) geklemmt ist.

9. Freilauf nach einem der Ansprüche 1 bis 8,
**dadurch gekennzeichnet, dass** der Wälzkörper (40) mit einer Rampe (26) des antreibenden Teils (20) und einer zylindrischen Fläche (35) des angetriebenen Teils (30) zusammenwirkt.

10. Freilauf nach einem der Ansprüche 1 bis 9,
**dadurch gekennzeichnet, dass** sich der Verbindungsraum (50) in Längsrichtung entlang der Drehachse (AX) von einer ersten Seite (51) bis zu einer zweiten Seite (52) erstreckt, wobei der Freilauf (10) eine einzige besagte Barriere (70) umfasst, die in Längsrichtung gegen die erste Seite (51) des Verbindungsraums (50) angeordnet ist, wobei der Freilauf (10) eine Öffnung (55) umfasst, die die zweite Seite (52) und eine äußere Umgebung (EXT) in Fluidverbindung bringt.

11. Freilauf nach Anspruch 10,
**dadurch gekennzeichnet, dass** ein umschlossener Teil des angetriebenen Teils (30) zumindest teilweise von einem nicht umschlossenen Teil des antreibenden Teils (20) umgeben ist oder ein umschlossener Teil des antreibenden Teils (20) zumindest teilweise von einem nicht umschlossenen Teil des angetriebenen Teils (30) umgeben ist, dass der nicht umschlossene Teil einen ringförmigen Vorsprung (33) aufweist, der gegenüber der zweiten Seite (52) und einem verschlossenen Ende (24) des umschlossenen Teils angeordnet ist, und dass die Öffnung (55) zwischen dem Vorsprung (33) und dem verschlossenen Ende (24) angeordnet ist.

12. Freilauf nach einem der Ansprüche 1 bis 11,
**dadurch gekennzeichnet, dass** der Freilauf (10) mindestens ein inneres Lager (62) aufweist, das in dem Verbindungsraum (50) zwischen dem antreibenden Teil (20) und dem angetriebenen Teil (30) eingefügt ist.

13. Freilauf nach einem der Ansprüche 1 bis 12,
**dadurch gekennzeichnet, dass** ein umschlossener Teil des angetriebenen Teils (30) zumindest teilweise von einem nicht umschlossenen Teil des antreibenden Teils (20) umgeben ist oder ein umschlossener Teil des antreibenden Teils (20) zumindest teilweise von einem nicht umschlossenen Teil des angetriebenen Teils (30) umgeben ist, dass der umschlossene Teil hohl ist und mindestens einen Kanal (25) aufweist, der den Verbindungsraum (50) und eine in diesem umschlossenen Teil angeordnete innere Umgebung (INT) in Fluidverbindung bringt, wobei die Schmiervorrichtung (80) einen Injektor (81) aufweist, der das Schmierfluid (85) in die innere Umgebung (INT) injiziert.

14. Freilauf nach Anspruch 13,
**dadurch gekennzeichnet, dass** der umschlossene Teil einen Rand (23) aufweist, der sich in der inneren Umgebung (INT) radial zur Drehachse (AX) hin erstreckt, ohne diese Drehachse zu erreichen, wobei sich die innere Umgebung (INT) in Längsrichtung entlang der Drehachse (AX) von dem Rand (23) bis zu einem verschlossenen Ende (24) des umschlossenen Teils erstreckt.

15. Fahrzeug (1),
**dadurch gekennzeichnet, dass** das Fahrzeug (1) einen Freilauf (10) nach einem der Ansprüche 1 bis 14 aufweist.

16. Fahrzeug nach Anspruch 15,
**dadurch gekennzeichnet, dass** das Fahrzeug (1) einen Motor (2) und einen Rotor (3) aufweist, die an der Bewegung des Fahrzeugs (1) beteiligt sind, wobei der antreibende Teil (20) funktionell mit einer Welle des Motors (2) verbunden ist und der angetriebene Teil (30) mit dem Rotor (3) verbunden ist.

## Claims

1. Freewheel (10) comprising a driving part (20) and a driven part (30) that are free to rotate about an axis of rotation (AX), said freewheel (10) comprising a cage (400) supporting at least one rolling element (40) arranged in a connection space (50), said connection space (50) being radially located relative to the axis of rotation (AX) between a driving connection section (21) of the driving part (20) and a driven connection section (31) of the driven part (30), said freewheel (10) having at least one lubrication device (80) conveying a lubricating fluid (85) into the connection space (50), **characterised in that** said freewheel (10) comprises at least one variable-opening barrier (70) radially disposed between the driving part (20) and the driven part (30) and longitudinally disposed against the connection space (50), said opening being indexed on a relative position of the cage (400) and of the driving part (20).

2. Freewheel according to Claim 1,
**characterised in that** said barrier (70) comprises a first part (71) that is fixed relative to the driving part (20), said barrier comprising a second part (76) rigidly connected to said cage (400), the first part (71) comprising at least one first passage (73), the second part (76) comprising at least one second passage (78) longitudinally facing the first passage (73) in a disengaged operating mode of the freewheel (10).

3. Freewheel according to Claim 2,
**characterised in that** said first part comprises a first ring (72) provided with said at least one first passage (73), said second part (76) comprising a second ring (77) provided with said at least one second passage (78).

4. Freewheel according to Claim 3,
**characterised in that** said first ring (72) is parallel to the second ring (77).

5. Freewheel according to any one of Claims 3 to 4,
**characterised in that** said first ring (72) and said second ring (77) are castellated, said at least one first passage (73) being circumferentially disposed between two first castellations (74) of the first ring (72), said at least one second passage (78) being circumferentially disposed between two second castellations (79) of the second ring (77).

6. Freewheel according to Claim 5,
**characterised in that** at least one first castellation (74) comprises a stop (75) free to rotate in a second passage (78) of said at least one second passage (78).

7. Freewheel according to any one of Claims 5 to 6,
**characterised in that** at least one second castellation (79) comprises a protuberance (750) free to rotate in a first passage (73) of said at least one first passage (73).

8. Freewheel according to any one of Claims 2 to 7,
**characterised in that** said first part (71) is longitudinally wedged between a shoulder (20) of the driving part (20) and an inner ring (610) of a roller bearing (61).

9. Freewheel according to any one of Claims 1 to 8,
**characterised in that** said rolling element (40) engages with a ramp (26) of the driving part (20) and a cylindrical face (35) of the driven part (30).

10. Freewheel according to any one of Claims 1 to 9,
**characterised in that** the connection space (50) longitudinally extends along the axis of rotation (AX) from a first side (51) to a second side (52), said freewheel (10) comprising only one of said barriers (70) longitudinally disposed against the first side (51) of the connection space (50), said freewheel (10) comprising a port (55) that fluidly connects said second side (52) with an external environment (EXT).

11. Freewheel according to Claim 10,
**characterised in that** a surrounded part of the driven part (30) is at least partially surrounded by an unsurrounded part of the driving part (20) or a surrounded part of the driving part (20) is at least partially surrounded by an unsurrounded part of the driven part (30), said unsurrounded part comprises an annular protuberance (33) arranged facing the second side (52) and a closed end (24) of the surrounded part, said port (55) being disposed between said protuberance (33) and said closed end (24).

12. Freewheel according to any one of Claims 1 to 11,
**characterised in that** said freewheel (10) comprises at least one inner bearing (62) interposed in the connection space (50) between the driving part (20) and the driven part (30).

13. Freewheel according to any one of Claims 1 to 12,
**characterised in that** a surrounded part of the driven part (30) is at least partially surrounded by an unsurrounded part of the driving part (20) or a surrounded part of the driving part (20) is at least partially surrounded by an unsurrounded part of the driven part (30), said surrounded part being hollow and comprising at least one channel (25) fluidly connecting the connection space (50) with an internal environment (INT) disposed in this surrounded part, said lubrication device (80) comprising an injector (81) injecting said lubricating fluid (85) into said internal environment (INT).

14. Freewheel according to Claim 13,
**characterised in that** said surrounded part comprises a flange (23) that radially extends into the internal environment (INT) towards the axis of rotation (AX), without reaching this axis of rotation (AX), said internal environment (INT) longitudinally extending along the axis of rotation (AX) from said flange (23) to a closed end (24) of the surrounded part.

15. Vehicle (1),
**characterised in that** said vehicle (1) comprises a freewheel (10) according to any one of Claims 1 to 14.

16. Vehicle according to Claim 15,
**characterised in that** said vehicle (1) comprises an engine (2) and a rotor (3) assisting the movement of the vehicle (1), the driving part (20) being functionally connected to a shaft of the engine (2) and said driven part (30) being connected to the rotor (3).
